# EUROPEAN PATENT SPECIFICATION

(11) **EP 0 971 282 B1**
(45) Date of publication and mention of the grant of the patent: **22.03.2006**
(21) Application number: 98830417.6
(22) Date of filing: 09.07.1998
(51) Int. Cl.: G06F 1/14

(54) **Multi-processor system with synchronized system time**
Mehrprozessorsystem mit synchronisierter Systemzeit
Système multiprocesseur avec temps de système synchronisé

(43) Date of publication of application: 12.01.2000
(73) Proprietor: BULL S.A., 78434 Louveciennes Cedex (FR)
(72) Inventor: Majo, Tommaso, 20010 Santo Stefano Ticino - Milano (IT); Paluello, Paolo, 20011 Corbetta - Milano (IT)
(74) Representative: Long, Giorgio

(56) References cited:
- EP-A- 0 722 233
- GB-A- 2 267 985
- US-A- 4 746 920
- ABALI B ET AL: "CLOCK SYNCHRONIZATION ON A MULTICOMPUTER" JOURNAL OF PARALLEL AND DISTRIBUTED COMPUTING, vol. 40, no. 1, 10 January 1997 (1997-01-10), pages 118-130, XP000682841 ISSN: 0743-7315

## Description

The present invention relates to a multi-processor processing system and, in particular, to a processing system according to the preamble of the first claim.

Multi-processor processing systems in which several processors perform different operations simultaneously are commonly used to achieve high working performance. In a particular type of multi-processor processing system known as a system with distributed architecture or with loosely-coupled processors, the data is exchanged between the various processors by means of suitable messages, without the use of directly shared resources. Typically, the processors are grouped in nodes (or modules) the operation of each of which is synchronized independently by means of a corresponding clock signal. These processing systems differ from those of the type with tightly-coupled processors, in which the data is exchanged between the various processors by means of a shared memory and the operation of which is synchronized by means of a single system clock signal.

In processing systems, it is generally necessary to have a timer which stores a system time; this system time is used, for example, to control the date and the time, to identify the moment at which data of various types (such as, for example, a file or a record of a database) have been modified, so as to be able to select the most recent version thereof, etc.

In tightly-coupled systems, a counter, the content of which is increased for every system clock signal, is incorporated in each processor. Since the counters are activated at the same initial moment and there is a single system clock signal, all of the counters will always have the same content.

In loosely-coupled systems, on the other hand, it is extremely difficult to achieve a common system time at all of the nodes since the various clock signals cannot be synchronized with one another. One possible solution would be to use a single counter disposed in a selected node (and increased for every corresponding clock signal), the content of the counter being read by any processor, when necessary; however, this system supplies an exact system time only in the node in which the counter is present, whilst in the other nodes, the value received is sure to be less than the actual system time because of the time required to transmit the value. This leads to inaccuracies which cannot be tolerated in many practical applications.

Document US-4746920 describes a method and an apparatus implementing that method, for synchronizing and managing the "system clocks" maintained by each of a number of processor units forming a multiprocessor system. The proposed methods is based on an averaging technique.

The object of the present invention is to overcome the aforementioned drawbacks. To achieve this object, a multi-processor processing system as described in the first claim is proposed.

The present invention also proposes a corresponding method of controlling a system time in the processing system.

Further characteristics and the advantages of the multi-processor processing system according to the present invention will become clear from the following description of a preferred embodiment thereof, given by way of nonlimiting example, with reference to the appended drawings, in which:
Figure 1 is a basic block diagram of a processing system in which the present invention can be used,
Figure 2 shows schematically the structure of the remote bridge unit,
Figure 3 shows an embodiment of the timer block.

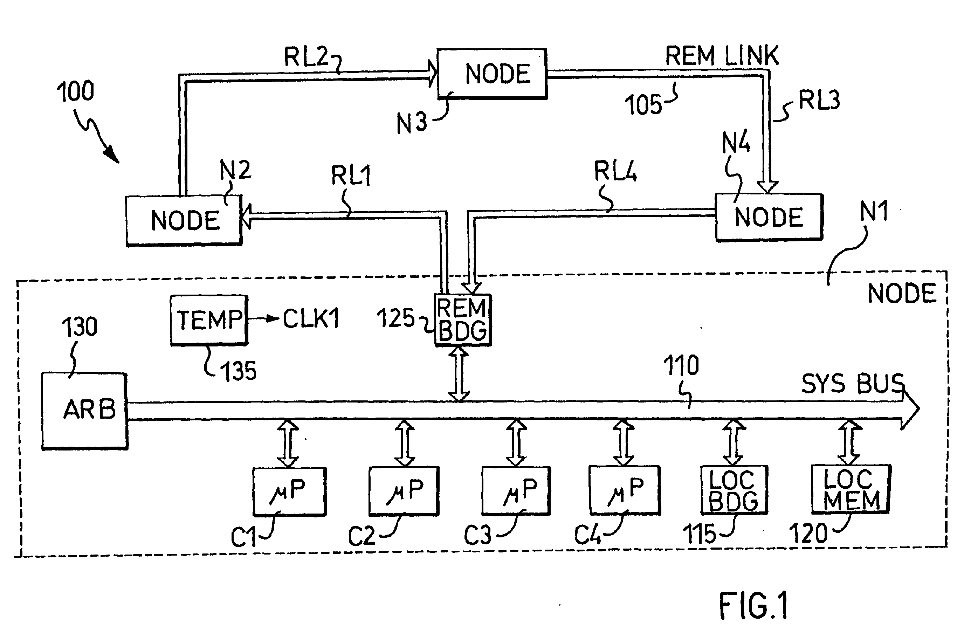

With reference in particular to Figure 1, this shows a processing system 100 of the cache-coherent non-uniform memory access (cc-NUMA) type. The processing system 100 includes N nodes (where N 2), of which four (indicated N1, N2, N3 and N4) are shown in the drawing; the nodes N1-N4 are connected to one another by means of a remote communication-channel ring (REM LINK) 105. The remote ring 105 is constituted by N unidirectional point-to-point communication channels RL1, RL2, RL3 and RL4, each of which interconnects two adjacent nodes; in particular, the channel RLi (where i = 1..4) enables messages to be sent from the node Ni to the next node N (i+1) (the channel RL4 enables messages to be sent from the node N4 to the next node N1). Alternatively, two or more rings, a network (mesh router) or other equivalent remote communication means are provided.

The node N1 (similar considerations apply to the other nodes N2-N4) is constituted by a system bus (SYS BUS) 110 to which one or more processors (µP) C1, C2, C3, C4 (four in the embodiment illustrated), typically having internal, two-level cache-type memories (not shown in the drawing), are connected in parallel. A local bridge (LOC BDG) 115 is also connected to the system bus 110 and controls interconnection with a local bus (not shown in the drawing) to which a group (cluster) of input/output units is connected. The node N1 includes a local memory (LOC MEM) 120, typically a dynamic random access memory (DRAM), connected to the system bus 110 by means of a suitable control unit (not shown in the drawing). A remote bridge (REM BDG) 125 connects the system bus 110 to the remote ring 105 and controls the interconnection of the node N1 with the other nodes N2-N4 of the processing system 100. An arbitration unit (ARB) 130 controls mutually exclusive access to the system bus 110 by the connected agents C1-C4, 115, 120 and 125.

A timer unit (TEMP) 135, typically formed by a quartz oscillator, generates a clock signal CLK1 which is supplied to the processors C1-C4, to the local bridge 115, to the local memory 120, to the remote bridge, 125, and to the arbitration unit 130 in order to synchronize the operation of the node N1. Each node Ni includes a corresponding timing unit which generates an independent clock signal CLKi. In accordance with the invention, the clock signals CLKi of the various nodes have different frequencies.

In the processing system 100 described above, each processor C1-C4 can access both the data contained in the local memory 120 and the data contained in the local memories of the other nodes N2-N4, referred to collectively as remote memory. Naturally, the access time is not uniform (hence the name NUMA) since the access time to the remote memory is much longer than the access time to the local memory. This system also ensures, by means of suitable protocols, the coherence of the data replicated in the various cache memories, both from the local memory and from the remote memory (hence the name cc).

The present invention may, however, also be implemented with processing systems having different loosely-coupled architecture and, in general, with any multi-processor processing system comprising a plurality of nodes each having means for generating an independent clock signal for synchronizing the operation of the node.

In the processing system according to the present invention, a time value (called the time base or TBi) , indicative of a system time, is stored in each node Ni.

The TBi value stored in each node Ni is increased, upon each corresponding clock signal CLKi, by a predetermined value (called the local period or LOCPERIODi). The LOCPERIODi value of each node Ni is set in a manner such as to simulate a virtual frequency of modification of the Tbi values, this frequency being substantially equal for every node N1-N4 of the system. For example, if the nodes N1, N2, N3 and N4 have clock frequencies of 100 MHz, 150 MHz, 200 MHz and 75 MHz, respectively, the LOCPERIODi values are set at 6, 4, 3 and 8, respectively. Thus, for each clock signal CLK1 (at 100 MHz), the value TB1 of the node N1 is increased by 6 units (that is, to a virtual frequency of 6· 100 = 600 MHz), for each clock signal CLK2 (at 150 MHz) the value TB2 is increased by 4 units (that is, to a virtual frequency of 4 · 150 = 600 MHz), for each clock signal CLK3 (at 200 MHz), the value TB3 is increased by 3 units (that is, to a virtual frequency of 3·200 = 600MHz), and for each clock signal CLK4 (at 75 MHz), the value TB4 is increased by 8 units (that is, to a virtual frequency of 8·75 = 600 MHz).

A selected node, called the reference (or master) node, is used for synchronizing all of the TBi values; the master node is preferably constituted by the node (for example, the node N1) the local memory of which contains a first block of data accessible by means of an address of value zero (although the use of another node is not excluded). In particular, each node N2-N4 other than the master node N1 periodically performs a synchronization operation in which the TBi value is modified in dependence on the value TB1 of the master node N1 and on a value indicative of a time required to transmit the value TB1 from the master node N1 to the node in question. For example, if the value TB1 is 3,500,200,100 and the time required to transmit the value TB1 from the node N1 to the node N2 is 1,500,000, the value TB2 will be set at 3,500,200,100 + 1,500,000 = 3,501,700,100, so as to take account of the time elapsed after the detection of the value TB1.

The TBi values stored in the various nodes of the system are thus set initially (by means of a first synchronization operation) at a common starting value. The periodic synchronization operations then enable the TBi values to be kept substantially equal to one another, irrespective of their drift over time. This drift is due to the fact that, since the TBi and LOCPERIODi values are generally expressed as whole numbers, it is not always possible to ensure a precisely equal frequency of modification of the TBi values of the various nodes. Moreover, even in an ideal situation, the TBi values in any case undergo a drift over time caused by the difference between the actual frequency of the clock signals and their nominal frequency.
The TBi value stored in each node can be read by the agents of the same node. The transmission of the TBi value to a requesting agent (executed by means of the system bus) is very quick (a few pulses of the clock signal) so that the TBi value received by the requesting agent is extremely accurate.

The solution of the present invention is particularly simple and enables a system timer to be controlled very accurately without overloading the processing system as a whole.

The synchronization operation is preferably performed with the use of a message sent periodically (at a frequency defined by a synchronization period SYNCPERIOD) from the master node N1 to the other nodes N2-N4. In particular, the synchronization message is sent from the master node N1 to the next node N2, then from the node N2 to the next node N3, and so on, until the synchronization message comes back to the master node N1; this renders the system extremely simple and reduces traffic on the remote ring to the minimum. Alternatively, the synchronization operation is activated periodically (even at different frequencies) by each node (by means of a request sent to the master node), etc.

A method in accordance with the invention consists of setting the global virtual frequency to a predefined value; the value selected is such as to be large enough to ensure that the TBi values are accurate for any clock-signal frequency within a predetermined range and, at the same time, such that the LOCPERIODi and SYNCPERIOD values do not exceed their maximum permissible size. The global virtual frequency selected is preferably such as to achieve an exact whole number for the LOCPERIODi value of the master node so that the error caused by the adjustment of the frequency of modification of the TBi value to the global virtual frequency is zero in that node. This enables new nodes (having a clock frequency below the maximum) to be added to the system without the need to modify the global virtual frequency (and hence the SYNCPERIOD and LOCPERIODi values of the other nodes), rendering the system extremely flexible.

The SYNCPERIOD value is set at a value small enough to ensure that the difference between the TBi values of the various nodes (caused by the drift of the actual clock signals, by the error introduced by the LOCPERIODi values, and by the inaccuracy of the synchronization process) is below a maximum permissible value. At the same time, the SYNCPERIOD value should not be too low in order not to overload the remote ring with excessively frequent synchronization messages.

A system with nodes having any clock frequency no greater than 150MHz, with the master node having a clock frequency of 90 MHz, is considered by way of example. The global virtual frequency is set at 399, 960 MHz (so as to achieve a LOCPERIODi value which is an exact whole number, that is, 399,960/90 = 4,444 for the master node) with a time base unit value, corresponding to each unitary increase of the TBi values, of 1/399,960·10⁶ = 2.500250025003·10⁻¹² = 2.500250025003 ps.

The minimum LOCPERIODi value is that which corresponds to the maximum clock frequency (150 MHz), that is, 399, 960/150 = 2666.4, rounded up to the next whole number 2667. The maximum percentage error caused by the rounding-up is equal to one unit relative to the minimum LOCPERIODi value, that is, 1/2667 = 0.03749531308586%. It is assumed that the oscillators used to generate the clock signals have an accuracy of 50 parts per million (PPM), that is 0.005%; in this case, the error introduced in the master node is equal to 0.005% (since the error caused by the LOCPERIODi value is zero), and the maximum percentage error is 0.03749531308586 + 0.005 - 0.04249531308586%. Thus, if the worst case in which these errors are of opposite sign (one node advanced and one node retarded) is considered, the errors are added so that the maximum total percentage error is 0.04249531308586 + 0.005 = 0.04749531308586%.

It is then assumed that the difference between the TBi values is to be kept below a predetermined value, for example 5 µs. If the inaccuracy of the synchronization process is estimated to be 1 µs, in order to keep the difference below the desired value, it is necessary for the drift of the TBi values to be no greater than 5 - 1 = 4 µs. The maximum total percentage error calculated above produces this drift after a period of time p_{˙} defined by the equation P-0.04749531308586% = 4 10⁻⁶, which gives P = 4 ·10⁻⁶·10²/0.04749531308586 = 8 .421883634642 · 10⁻³ = 8.421883634642ms. In order to keep the difference below the desired value is therefore necessary for the synchronization process to have a period at most equal to this period of time, so that the SYNCPERIOD value (expressed in the base units) is 8.421883634642 · 10-³/2 . 500250025003 · 10⁻¹² = 3.368416578511·10⁹ = 3,368,416,578.511; rounded up to the nearest whole number SYNCPERIOD = 3,368,416,579.

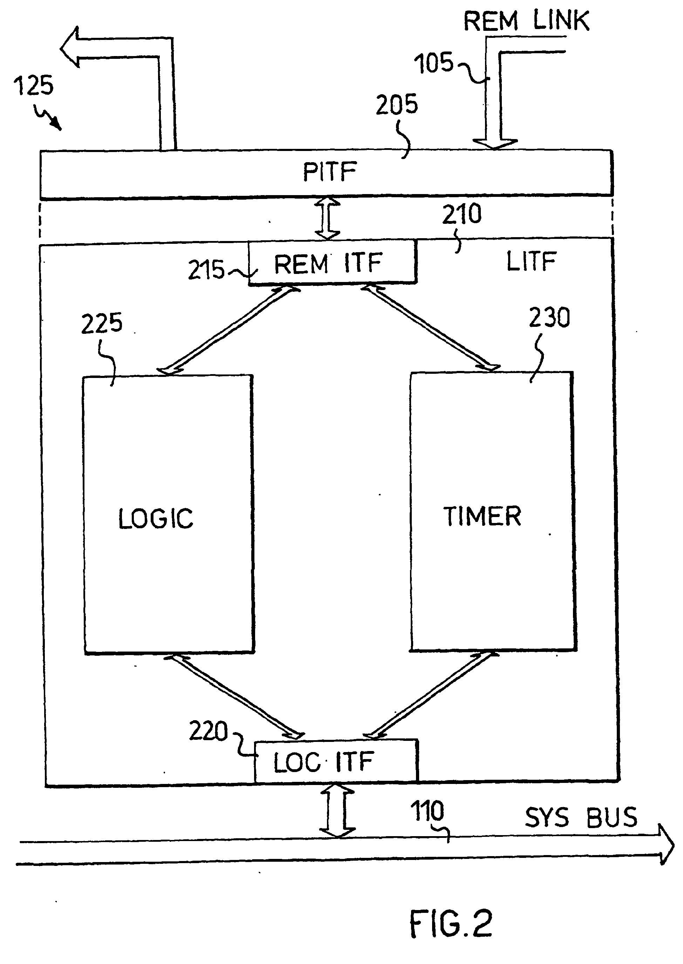

With reference now to Figure 2 (the elements already shown in Figure 1 are identified by the same reference numbers), the remote bridge 125 of a generic node Ni includes a physical interface (PITF) 205 with the remote ring 105. The messages transmitted on the remote ring 105 are organized in packets. Each packet includes various service fields which identify the destination node, the node which emitted the packet, the length of the packet, the type of packet, its priority for transmission on the remote ring, etc., and a data structure constituted, for example, by 8 blocks (beats) of 64 bits; the packets are defined in accordance with the standard known as the Scalable Coherent Interface (SCI) standard defined in IEEE specification P1596.3/051 (although the use of messages of different types is not excluded).

The physical interface 205 receives the packets transmitted on the channel RL (i-1) from the preceding node N (i-1) and determines the corresponding destination node. If the destination node is other than the node Ni, the physical interface 205 transmits the packet received to the next node N(i+1) on the channel RL(i+1). Otherwise, the data structure and the data which identify the type of packet are supplied to a logic interface (LITF) 210 which determines the type of packet and performs the associated operations. Conversely, the logic interface 210 constructs a packet for transmission on the remote ring 105 and supplies it to the physical interface 205 which transmits it to the next node N(i+1) on the channel RL(i+1).

The logic interface 210 includes a remote interface block (REM ITF) 215 connected to the physical interface 205 and a local interface block (LOC ITF) 220 connected to the system bus 110. Interposed between the remote interface block 215 and the local interface block 220 are a logic block 225 which controls the operation of the remote bridge unit 125 (for example, the coherence protocols of the cache memories), and a timer block 230 which controls the updating and the synchronization of the TBi value. The fact that the timer block is disposed inside the remote bridge unit is particularly advantageous since it enables the TBi values of the various nodes to be synchronized with one another extremely quickly without requiring the transfer of data within the node itself (that is, on the system bus); the present invention may, however, also be implemented with the timer block disposed in a different position, for example, in the arbitration unit, in a processor of the node, or the like.

The remote interface block 215 decodes the type of packet received from the remote ring 105 (by means of the physical interface 205); if it is a synchronization packet, the corresponding data structure is supplied to the timer block 230, whereas, if not, the data structure is supplied to the logic block 225. Conversely, the remote interface 215 receives a synchronization packet from the timer block 230 or a packet of any other type from the logic block 225 and these are then transmitted to the physical interface 205; a high priority for transmission on the remote ring is preferably associated with the synchronization packets so as to increase the accuracy of the synchronization process.

The local interface block 220 controls a protocol for access to the system bus 110. In particular, the local interface 220 receives from the system bus 110 all of the data transmitted thereon; in the case of an instruction which requires an initialization of the TBi value (emitted, for example, by a processor of the node), the corresponding data is supplied to the timer block 230, whereas, otherwise, the data received from the system bus is supplied to the logic block 225. Conversely, the local interface 220 controls requests for access to the system bus 110 in order to transmit thereon data received from the logic block 225 or the system time value received from the timer block 230, in response to a corresponding reading instruction (emitted by any agent of the node).

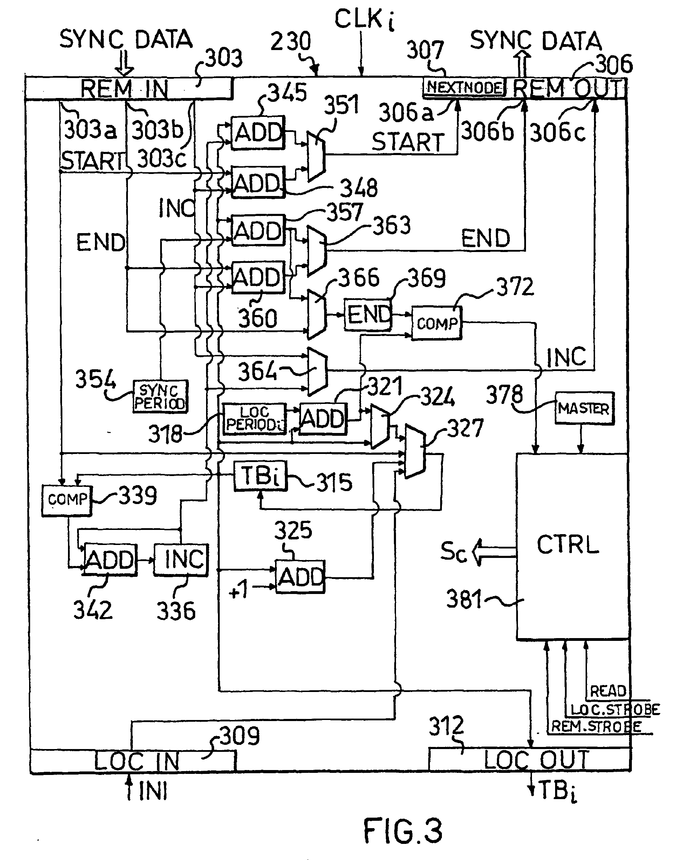

With reference now to Figure 3, the timer block 230 includes a remote input latching block (REM IN) 303 and a remote output latching block (REM OUT) 306 which receive the data structure of the synchronization packet (SYNC DATA) from the remote interface block and transmit it to the remote interface block, respectively.

In a preferred embodiment of the present invention, the data structure of the synchronization packet includes an initial field (START), for example, of 64 bits, a final field (END), for example, of 64 bits, and an increment field (INC), for example of 32 bits. In the embodiment in question, in which the synchronization packet is constituted by 8 beats of 64 bits, the first beat is used for the START field, the second beat for the END field, and part of the third beat for the INC field, the fourth to eighth beats not being used.

The latching block 303 receives the data structure of a synchronization packet as an input and produces the values of the START, END and INC fields at its outputs 303a, 303b and 303c, respectively; conversely, the latching block 306 receives the values of the START, END and INC fields at its inputs 306a, 306b and 306c, and produces the corresponding data structure of a synchronization packet at its output. In the latching block 306, there is also a register 307 (for example of 16 bits) which stores a NEXTNODE value indicative of the node to which the synchronization packet should be transmitted; this node is preferably set to be the immediately following node (that is, the node physically closest to the node in question).

A local latching block (LOC IN) 309 receives (from the local interface block) an initialization value (INI) for the TBi value (as a result of a corresponding instruction) and outputs the same value. A local output latching block (LOC OUT) 312 outputs a system time equal to the time value TBi in response to a corresponding reading instruction.

The timing block 230 also includes a register 315 (for example with 64 bits) which stores the TBi value and a register 318 (for example with 16 bits) which stores the LOCPERIODi value. The output of the register 315 and the output of the register 318 are connected to the input of an adder circuit (ADD) 321. The output of the register 315 and the output of the adder 321 are connected to separate inputs of a multiplexer 324 which transfers to its own output the value present at only one of these inputs, in dependence on a suitable selection signal. An adder 325 has an input connected to the output of the register 315 and another input which is kept at a predetermined value, preferably +1. A further multiplexer 327 has separate inputs connected to the output of the multiplexer 324, to the output 303a, to the output of the adder 325, and to the output of the latching block 309; the output of the multiplexer 327 is connected to the input of the register 315. The output of the register 315 is also connected to the input of the latching block 312.

A register 336 (for example with 32 bits) is used to store an increment value (INC) indicative of a time required to transmit the synchronization packet from a generic node Ni to a subsequent node N(i+1). A comparator circuit 339 has separate inputs connected to the output of the register 315 and to the output 303a. The output of the comparator 339 and the output of the register 336 are connected to the input of an adder 342, the output of which is connected to the input of the register 336.

The output of the register 315 and the output of the register 336 are connected to the input of an adder 345. A further adder 348 has an input connected to the output 303a and another input connected to the output 303c. The output of the adder 345 and the output of the adder 348 are connected to separate inputs of a multiplexer 351 the output of which is connected to the input 306a.

A register 354 (for example with 32 bits) is used to store the SYNCPERIOD value. The output of the register 315 and the output of the register 354 are connected to the input of an adder 357. A further adder 360 has an input connected to the output 303b and another input connected to the output 303c. A multiplexer 363 has separate inputs connected to the output of the adder 357 and to the output of the adder 360; the output of the multiplexer 363 is connected to the input 306b.

A multiplexer 364 has separate inputs connected to the output 303c and to the output of the register 336; the multiplexer 364 transfers selectively to its output, which is connected to the input 306c, the value present at only one of these inputs.

The output of the adder 357 and the output 303b are connected to separate inputs of a multiplexer 366; the output of the multiplexer 366 is connected to the input of a register 369 (for example with 64 bits), used to store a final count value (END). The output of the adder 321 and the output of the register 369 are connected to the input of a comparator 372.

A flag 378 is also used to indicate (for example, when it is turned on) that the node is a master node.

The operation of the timer block 230 is controlled by a control logic unit (CTRL) 381 constituted basically by a finite state machine, by means of suitable control signals (indicated Sc as a whole). The output of the comparator 372 and the output of the flag 378 are connected to the input of the logic control unit 381 which also receives as an input a signal REM.STROBE, which indicates (when it is turned on) that the data structure of a synchronization packet is available at the input of the latching block 303, a signal LOC. STROBE, which indicates (when it is turned on) that an initialization value is available at the input of the latching block 309, and a signal READ which indicates (when it is turned on) that the system time has been requested by a reading instruction.

Normally, the control logic unit 381 is in a state in which, upon each clock signal CLKi, the signal output by the adder 321 is transferred, by means of the multiplexers 324 and 327, to the input of the register 315; the TBi value is thus increased by the LOCPERIODi value upon each clock signal CLKi.

If the node is not a master node (flag 378 off), when the TBi value reaches (or exceeds) the final count value stored in the register 369 (signal output by the comparator 372 on), the control logic unit 381 is brought to a state in which, upon each clock signal CLKi, the signal output by the register 315 is returned to the input of the same register 315 by means of the multiplexers 324 and 327, so as to keep the TBi value fixed.

If, on the other hand, the node is a master node (flag 378 on), the increase of the TBi value is never interrupted. When the TBi value reaches (or exceeds) the final count value stored in the register 369 (output signal of the comparator 372 on), the control logic unit 381 controls the structure in a manner such that the signal output by the adder 345 (that is, the sum of the TBi value and the increment value) is transferred, by means of the multiplexer 351, to the input 306a (START field value), the signal output by the adder 357 (that is, the sum of the TBi value and the SYNCPERIOD value) is transferred, by means of the multiplexer 363, to the input 306b (END field value), and the increment value stored in the register 336 is transferred, by means of the multiplexer 364, to the input 306c (INC field value). At the same time, the same signal output by the adder 357 (that is, the sum of the TBi value and the SYNCPERIOD value) is also transferred by the multiplexer 366 to the register 369 (so as to update the final count value). The control logic unit 381 then activates the latching block 306 so as to construct a synchronization packet which contains these values (and the NEXTNODE value) and which is transmitted to the next node on the remote ring.

When a non-master node receives a synchronization packet (REM.STROBE signal on), the control logic unit 381 activates the latching block 303 in order to obtain the values of the corresponding START, END and INC fields at the outputs 303a, 303b and 303c, respectively. The synchronization packet received is suitably modified in order to be transmitted to the next node. In particular, the signal output by the adder 348 (that is, the sum of the START field value and the INC field value) is transferred, by means of the multiplexer 351, to the input 306a (new START field value), the signal output by the adder 360 (that is, the sum of the END field and the INC field values) is transferred, by means of the multiplexer 363, to the input 306b (new END field value), and the signal at the output 303c (INC field value) is transferred directly by means of the multiplexer 364 to the input 306c (new INC field value). The control logic unit 381 then activates the latching block 306 so as to construct a new synchronization packet which contains these values (and the NEXTNODE value) and which is sent to the next node on the remote ring.

At the same time, the signal at the output 303a (the START field value) is transferred, by means of the multiplexer 327, to the register 315 (so as to update the TBi value) and the signal at the output 303b (END field value) is transferred, by means of the multiplexer 366, to the register 369 (so as to update the final count value). The control logic unit 381 then returns to the normal operating state so that the TBi value is increased by the LOCPERIODi value upon each clock signal.

It should be noted that the final count values stored in the master node and in the immediately subsequent node are equal. The START field value loaded in the register 315 of the next node (equal to the final count TBi value of the master node plus the increment value) will therefore always be greater than the TBi value of the same node (which is kept fixed at the final count value). Similar considerations apply to the other nodes, in which the final count value and the START field value are both increased by the INC field value.

This solution ensures that the time measured by the TBi value is always increasing (monotonic); this result is achieved extremely simply and effectively. It should also be noted that the error introduced by the mechanism described above (when the TBi value is kept fixed) occurs only during the synchronization operation and hence within a time period of limited duration. Alternatively, equivalent structures are provided for interrupting the increase of the TBi value substantially before every synchronization operation in order to keep the TBi value fixed at a value no greater than the value set by the synchronization operation; the present invention may, however, also be implemented without this characteristic, for example, by the software control of any decrement of the system time, or the like.

When the synchronization packet is received from the master node after traveling around the entire remote ring (REM.STROBE signal on), the control logic unit 381 activates the latching block 303 in order to obtain the START field value of the corresponding data structure at the output 303a. This value, which is set initially at the TBi value of the master node plus the increment value (INC) and is modified by the addition of the INC field value from every other node, will therefore be equal to the initial TBi value plus N·INC. If the actual time taken to transmit the synchronization packet on each channel RLi is exactly equal to the increment value, the START field value received will be equal to the current TBi value; if, on the other hand, the actual transmission time is less than the increment value, the START field value received will be greater than the current TBi value, whereas, if the actual transmission time is greater than the increment value, the START field value received will be less than the current TBi value.

The START field value received is compared, by means of the comparator 339, with the TBi value stored in the register 315. The comparator 339 outputs a signal having a positive value (for example, +1) when the START field value is less than the TBi value, a zero value when the START field value is -equal to the TBi value, and a negative value (for example, -1) when the START field value is greater than the TBi value. The increment value stored in the register 336 is then consequently modified by the adder circuit 342.

The solution described above enables the increment value to be updated dynamically extremely simply and precisely in dependence on the actual traffic on the remote ring; this result is achieved with the use of the same synchronization packet, without overloading the remote ring by the transmission of any additional packet. Alternatively, each node updates its own increment value (indicative of the time taken to transmit the synchronization packet to the next node), or suitable packets are used to determine the transmission time, or the increment value is set at a predetermined value, etc.

Upon initialization of the system, the corresponding LOCPERIODi value is loaded in the register 318 of each node and the register 315 (TBi value) and the register 369 (final count value) are set at the same starting value, for example, zero. The master node is set by turning on the corresponding flag 378; at the same time, the SYNCPERIOD value is loaded in the register 354 and the register 336 (increment value) is set at a starting value, for example, zero (these values have no significance in the other nodes).

As soon as the timer blocks 230 are enabled, the TBi values of all of the nodes are thus immediately equal to the final count values stored in the registers 369 (output signal from the comparator 372 on). The TBi value of each non-master node is therefore kept fixed at the same starting value. At the same time, the master node sends a first synchronization packet on the remote ring. When a non-master node receives this synchronization packet, it updates the TBi value and the final count value and then activates the increment of the TBi value (as described in detail above). It will be noted that, in this case also, the START field value loaded in the register 315 (equal to the starting TBi value of the master node plus the increment value) will always be greater than or at least equal to the TBi value of the node in question (which is kept fixed at the starting value).

The TBi value (stored in the master node) may also be programmed to an initialization value by means of a corresponding instruction. When the initialization value is available at the input of the latching block 309 (LOC.STROBE signal on), the control logic 381 activates the latching block 309 so that the input signal of the block 309 is transferred to the output thereof and then, by means of the multiplexer 327, to the register 315; the TBi value thus updated is then transmitted to the other nodes of the system with the first synchronization packet, as described above.

When an agent of the node requires the system time to be read by means of a corresponding instruction (READ signal on), if the TBi value is not fixed (master node or non-master node with TBi value below final count value), the control logic unit 381 transfers the contents of the register 315 (TBi value) to the input of the latching block 312. If the TBi value is fixed (non-master node with TBi value which has reached or exceeded the final count value), the signal output by the adder 325 is transferred to the input of the register 315, by means of the multiplexer 327, so that the TBi value is increased by 1; the control logic unit 381 then transfers the contents of the register 315 (increased TBi value) to the input of the latching block 312. The signal input to the latching block 312 is then transferred to the output thereof in order to be supplied to the requesting agent.

The system time output by the latching block 312 when the TBi value is fixed will thus be increased by 1 upon each reading request. This enables the system time never to be stopped (strictly monotonic); moreover, the unitary increment prevents the risk of the TBi value subsequently being less (after a synchronization operation) than the value output at a previous moment. Alternatively, the TBi value is increased by a different value (generally of a few units to avoid the risk of having a system time which is not increasing), or reading of the system time is prevented when the TBi value is fixed, etc; the present invention may, however, also be implemented with the output of a system time which is always equal to the TBi value.

Naturally, in order to satisfy contingent and specific requirements, an expert in the art may apply to the above-described multi-processor processing system, many modifications and variations all of which, however, are included within the scope of protection of the invention, as defined by the following claims.

## Claims

1. A multi-processor processing system (100) comprising a plurality of nodes (N1-N4) each having means (135) for generating an independent clock signal (CLKi) for synchronizing the operation of the node (Ni),
each node (Ni) includes means (315) storing a time value (TBi) indicative of a system time and means (318, 321, 324, 327) for increasing the time value (TBi) by a local period value (LOCPERIODi) upon each clock signal (CLKi) so as to simulate a substantially equal frequency of modification of the time value (TBi) for all of the nodes (N1-N4),
one of the nodes being a reference node (N1), each other node (N2-N4) comprising means (303a, 327) for periodically performing a synchronization operation in which the time value (TBi) is modified in dependence on the time value (TB1) of the reference node (N1) and on a value (INC) indicative of a time required to transmit the time value (TB1) of the reference node (N1) from the reference node (N1) to the other node (N2-N4).
**characterized in that** the clock signals (CLKi) of the nodes have different frequencies and:
said simulated modification frequency is set at a predetermined value which is a multiple of the frequency of the clock signal (CLK1) of the reference node (N1), and
the local period value (LOCPERIODi) of each node (Ni) is equal to the simulated modification frequency divided by the frequency of the corresponding clock signal (CLKi).

2. A processing system (100) according to Claim 1, in which the reference node (N1) includes means (306, 369, 372) for periodically transmitting a synchronization message (SYNC DATA) to the other nodes, each other node (N2-N4) using the synchronization message (SYNC DATA) to perform the synchronization operation.

3. A processing system (100) according to Claim 2, in which the synchronization message (SYNC DATA) includes an initial field (START) and an increment field (INC), the reference node (N1) comprising means (336) storing an increment value indicative of a time required to transmit the synchronization message (SYNC DATA) between two consecutive nodes (Ni, Ni+1), means (345, 351) for setting the initial field (START) of the synchronization message equal to the time value (TBi) plus the increment value, and means (364) for setting the increment field (INC) of the synchronization message equal to the increment value.

4. A processing system (100) according to Claim 3, in which the reference node (N1) includes means (306) for transmitting the synchronization message (SYNC DATA) to a subsequent node (N2), each other node (Ni) comprising means (303) for receiving the synchronization message (SYNC DATA) from a preceding node (Ni-1), means (303a, 327) for setting the time value (TBi) equal to the initial field (START) of the synchronization message received, means (303a, 348, 351) for modifying the receive synchronization message (SYNC DATA) by adding the increment field (INC) to the initial field (START), and means (306) for transmitting the modified synchronization message (SYNC DATA) to a subsequent node (Ni+1).

5. A processing system (100) according to any one of Claims 1 to 4, in which each other node (N2-N4) comprises means (324, 327, 369, 372) for interrupting the increase of the time value (TBi) substantially before each synchronization operation in order to keep the time value (TBi) fixed at a value no greater than the value modified by the synchronization operation.

6. A processing system (100) according to Claim 5, in which the synchronization message further includes a final field (END), the reference node (N1) comprising means (354, 357, 363) for setting the final field (END) of the synchronization message equal to the time value (TBi) plus a value (SYNCPERIOD) indicative of a period of the synchronization operation, each other node (Ni) comprising means (369) storing a final count value, means (324, 327, 369, 372) for interrupting the increase of the time value (TBi) when the time value (TBi) reaches the final count value, means (303b, 366) for setting the final count value equal to the final field (START) of the synchronization message received, and means (303b, 360, 363) for modifying the synchronization message (SYNC DATA) by adding the increment field (INC) to the final field (END).

7. A processing system (100) according to Claim 5 or Claim 6, in which each node (N1-N4) comprises a plurality of units (C1-C4, 115, 120, 125, 130), one of said unit being suitable to provide reading requests of said time value and the corresponding node comprising means (325, 327) for increasing the time value (TBi) by a predetermined value (+1) upon each corresponding reading request when the time value (TBi) is fixed.

8. A processing system (100) according to any one of Claims 3 to 7, in which the reference node (N1) includes means (303) for receiving the synchronization message (SYNC DATA) from the preceding node (N4), means (339) for comparing the initial field (START) of the synchronization message received with the time value (TBi), and means (342) for modifying the increment value in dependence on a result of the comparison.

9. A processing system (100) according to any one of Claims 1 to 8, in which the nodes (N1-N4) are connected to one another by remote communication means (105), one of said units (C1-C4, 115, 120, 125, 130) being a bridge unit (125) for connecting the node (Ni) to the remote communication means (105), the means (315) storing the time value (TBi) and the means (303a, 327) for performing the synchronization operation being disposed in the bridge unit (125).

10. A processing system (100) according to any one of Claims 1 to 9, in which the processing system (100) is a system of the cache-coherent non-uniform memory access type.

11. A method of controlling a system time in a multi-processor processing system (100) comprising a plurality of nodes (N1-N4) each having means (135) for generating an independent clock signal (CLKi) for synchronizing the operation of the node (Ni),
a) increasing, in each node (Ni) , a time value (TBi) indicative of a system time, upon each clock signal (CLKi), by a local period value (LOCPERIODi), so as to simulate a substantially equal frequency of modification of the time value (TBi) for all of the nodes (N1-N4),
b) periodically performing, in each node (N2-N4) other than a reference node (N1), a synchronization operation in which the time value (TBi) is modified in dependence on the time value (TB1) of the reference node (N1) and on a value (INC) indicative of a time required to transmit the time value (TB1) of the reference node (N1) from the reference node (N1) to the other node (N2-N4),
**characterized in that** said clock signals (CLKi) have different frequencies and **in that** it further comprises the steps of:
c) setting the simulated modification frequency at a predetermined value which is a multiple of the frequency of the clock signal (CLK1) of the reference node (N1) ,
d) setting the local period value (LOCPERIODi) of each node (Ni) equal to the simulated modification frequency divided by the frequency of the corresponding clock signal (CLKi).

## Patentansprüche

1. Ein Mehrprozessor-Verarbeitungssystem (100), das eine Mehrzahl von Knoten (N1 - N4) aufweist, die jeweils eine Einrichtung (135) zum Erzeugen eines unabhängigen Taktsignals (CLKi) zum Synchronisieren der Operation des Knotens (Ni) aufweisen,
wobei jeder Knoten (Ni) eine Einrichtung (315), die einen Zeitwert (TBi) speichert, der eine Systemzeit angibt, und eine Einrichtung (318, 321, 324, 327) zum Erhöhen des Zeitwerts (TBi) um einen Lokalperiodenwert (LOCPERIODi) auf jedes Taktsignal (CLKi) hin, um eine im Wesentlichen gleiche Modifikationsfrequenz des Zeitwerts (TBi) für alle Knoten (N1 - N4) zu simulieren, aufweist,
wobei einer der Knoten ein Referenzknoten (N1) ist, wobei jeder andere Knoten (N2 - N4) eine Einrichtung (303a, 327) zum periodischen Durchführen einer Synchronisationsoperation aufweist, bei der der Zeitwert (TBi) in Abhängigkeit von dem Zeitwert (TB1) des Referenzknotens (N1) und von einem Wert (INC), der eine Zeit angibt, die erforderlich ist, um den Zeitwert (TB1) des Referenzknotens (N1) von dem Referenzknoten (N1) zu dem anderen Knoten (N2 - N4) zu senden, modifiziert wird,
**dadurch gekennzeichnet, dass** die Taktsignale (CLKi) der Knoten unterschiedliche Frequenzen aufweisen und:
die simulierte Modifikationsfrequenz auf einen vorbestimmten Wert gesetzt ist, der ein Vielfaches der Frequenz des Taktsignals (CLK1) des Referenzknotens (N1) ist, und
der Lokalperiodenwert (LOCPERIODi) jedes Knotens (Ni) gleich der simulierten Modifikationsfrequenz geteilt durch die Frequenz des entsprechenden Taktsignals (CLKi) ist.

2. Ein Verarbeitungssystem (100) gemäß Anspruch 1, bei dem der Referenzknoten (N1) eine Einrichtung (306, 369, 372) zum periodischen Senden einer Synchronisationsnachricht (SYNC DATA) zu den anderen Knoten umfasst, wobei jeder andere Knoten (N2 - N4) die Synchronisationsnachricht (SYNC DATA) verwendet, um die Synchronisationsoperation durchzuführen.

3. Ein Verarbeitungssystem (100) gemäß Anspruch 2, bei dem die Synchronisationsnachricht (SYNC DATA) ein Anfangsfeld (START) und ein Inkrementfeld (INC) umfasst, wobei der Referenzknoten (N1) eine Einrichtung (336), die einen Inkrementwert speichert, der eine Zeit angibt, die erforderlich ist, um die Synchronisationsnachricht (SYNC DATA) zwischen zwei aufeinanderfolgenden Knoten (Ni, Ni+1) zu senden, eine Einrichtung (345, 351) zum Setzen des Anfangsfelds (START) der Synchronisationsnachricht gleich dem Zeitwert (TBi) plus dem Inkrementwert und eine Einrichtung (364) zum Setzen des Inkrementfelds (INC) der Synchronisationsnachricht gleich dem Inkrementwert aufweist.

4. Ein Verarbeitungssystem (100) gemäß Anspruch 3, bei dem der Referenzknoten (N1) eine Einrichtung (306) zum Senden der Synchronisationsnachricht (SYNC DATA) zu einem nachfolgenden Knoten (N2) umfasst, wobei jeder andere Knoten (Ni) eine Einrichtung (303) zum Empfangen der Synchronisationsnachricht von einem vorhergehenden Knoten (Ni-1), eine Einrichtung (303a, 327) zum Setzen des Zeitwerts (TBi) gleich dem Anfangsfeld (START) der empfangenen Synchronisationsnachricht, eine Einrichtung (303a, 348, 351) zum Modifizieren der empfangenen Synchronisationsnachricht (SYNC DATA) durch ein Hinzufügen des Inkrementfelds (INC) zu dem Anfangsfeld (START) und eine Einrichtung (306) zum Senden der modifizierten Synchronisationsnachricht (SYNC DATA) zu einem nachfolgenden Knoten (Ni+1) aufweist.

5. Ein Verarbeitungssystem (100) gemäß einem der Ansprüche 1 bis 4, bei dem jeder andere Knoten (N2 - N4) eine Einrichtung (324, 327, 369, 372) zum Unterbrechen der Erhöhung des Zeitwerts (TBi) im Wesentlichen vor jeder Synchronisationsoperation aufweist, um den Zeitwert (TBi) bei einem Wert fest zu halten, der nicht größer ist als der durch die Synchronisationsoperation modifizierte Wert.

6. Ein Verarbeitungssystem (100) gemäß Anspruch 5, bei dem die Synchronisationsnachricht ferner ein Endfeld (END) umfasst, wobei der Referenzknoten (N1) eine Einrichtung (354, 357, 363) zum Setzen des Endfelds (END) der Synchronisationsnachricht gleich dem Zeitwert (TBi) plus einem Wert (SYNCPERIOD) aufweist, der eine Periode der Synchronisationsoperation angibt, wobei jeder andere Knoten (Ni) eine Einrichtung (369), die einen Endzählwert speichert, eine Einrichtung (324, 327, 369, 372) zum Unterbrechen der Erhöhung des Zeitwerts (TBi), wenn der Zeitwert (TBi) den Endzählwert erreicht, eine Einrichtung (303b, 366) zum Setzen des Endzählwerts gleich dem Endfeld (START) der empfangenen Synchronisationsnachricht und eine Einrichtung (303b, 360, 363) zum Modifizieren der Synchronisationsnachricht (SYNC DATA) durch ein Hinzufügen des Inkrementfelds (INC) zu dem Endfeld (END) aufweist.

7. Ein Verarbeitungssystem (100) gemäß Anspruch 5 oder Anspruch 6, bei dem jeder Knoten (N1 - N4) eine Mehrzahl von Einheiten (C1 - C4, 115, 120, 125, 130) aufweist, wobei eine der Einheiten geeignet ist, um Leseanforderungen des Zeitwerts zu liefern, und der entsprechende Knoten eine Einrichtung (325, 327) zum Erhöhen des Zeitwerts (TBi) um einen vorbestimmten Wert (+1) auf jede entsprechende Leseanforderung hin, wenn der Zeitwert (TBi) fest ist, aufweist.

8. Ein Verarbeitungssystem (100) gemäß einem der Ansprüche 3 bis 7, bei dem der Referenzknoten (N1) eine Einrichtung (303) zum Empfangen der Synchronisationsnachricht (SYNC DATA) von dem vorhergehenden Knoten (N4), eine Einrichtung (339) zum Vergleichen des Anfangsfelds (START) der empfangenen Synchronisationsnachricht mit dem Zeitwert (TBi) und eine Einrichtung (342) zum Modifizieren des Inkrementwerts in Abhängigkeit von einem Ergebnis des Vergleichs umfasst.

9. Ein Verarbeitungssystem (100) gemäß einem der Ansprüche 1 bis 8, bei dem die Knoten (N1 - N4) miteinander durch eine Fernkommunikationseinrichtung (105) verbunden sind, wobei eine der Einheiten (C1 - C4, 115, 120, 125, 130) eine Brückeneinheit (125) zum Verbinden des Knotens (Ni) mit der Fernkommunikationseinrichtung (105) ist, wobei die Einrichtung (315), die den Zeitwert (TBi) speichert, und die Einrichtung (303a, 327) zum Durchführen der Synchronisationsoperation in der Brückeneinheit (125) angeordnet sind.

10. Ein Verarbeitungssystem (100) gemäß einem der Ansprüche 1 bis 9, wobei das Verarbeitungssystem (100) ein System vom Cache-kohärenten, nichteinheitlichen Speicherzugriffstyp ist.

11. Ein Verfahren zum Steuern einer Systemzeit in einem Mehrprozessor-Verarbeitungssystem (100), das eine Mehrzahl von Knoten (N1 - N4) aufweist, die jeweils eine Einrichtung (135) zum Erzeugen eines unabhängigen Taktsignals (CLKi) zum Synchronisieren der Operation des Knotens (Ni) aufweisen, mit folgenden Schritten:
a) Erhöhen eines Zeitwerts (TBi), der eine Systemzeit angibt, bei jedem Knoten (Ni) auf jedes Taktsignal (CLKi) hin um einen Lokalperiodenwert (LOCPERIODi), um eine im Wesentlichen gleiche Modifikationsfrequenz des Zeitwerts (TBi) für alle Knoten (N1 - N4) zu simulieren,
b) periodisches Durchführen einer Synchronisationsoperation in jedem anderen Knoten (N2 - N4) als einem Referenzknoten (N1), bei der der Zeitwert (TBi) in Abhängigkeit von dem Zeitwert (TB1) des Referenzknotens (N1) und von einem Wert (INC) modifiziert wird, der eine Zeit angibt, die erforderlich ist, um den Zeitwert (TB1) des Referenzknotens (N1) von dem Referenzknoten (N1) zu dem anderen Knoten (N2 - N4) zu senden,
**dadurch gekennzeichnet, dass** die Taktsignale (CLKi) unterschiedliche Frequenzen aufweisen, und **dadurch**, dass dasselbe ferner folgende Schritte aufweist:
c) Setzen der simulierten Modifikationsfrequenz auf einen vorbestimmten Wert, der ein Vielfaches der Frequenz des Taktsignals (CLK1) des Referenzknotens (N1) ist,
d) Setzen des Lokalperiodenwerts (LOCPERIODi) jedes Knotens (Ni) gleich der simulierten Modifikationsfrequenz geteilt durch die Frequenz des entsprechenden Taktsignals (CLKi).

## Revendications

1. Système de traitement multiprocesseur (100) comprenant une pluralité de noeuds (N1 à N4), chacun possédant un moyen (135) pour générer un signal d'horloge indépendant (CLKi) pour synchroniser le fonctionnement du noeud (Ni),
chaque noeud (Ni): comprend un moyen (315) stockant une valeur temporelle (TBi) indicative d'un temps système et un moyen (318, 321, 324, 327) pour augmenter la valeur temporelle (TBi) d'une valeur de période locale (LOCPERIODi) lors de chaque signal d'horloge (CLKi) de manière à simuler une fréquence essentiellement égale de modification de la valeur temporelle (TBi) pour tous les noeuds (N1 à N4),
l'un des noeuds étant un noeud de référence (N1), chacun des autres noeuds (N2 à N4) comprenant un moyen (303a, 327) pour réaliser périodiquement une opération de synchronisation dans laquelle la valeur temporelle (TBi) est modifiée en fonction de la valeur temporelle (TB1) du noeud de référence (N1) et d'une valeur (INC) indicative d'un temps nécessaire pour transmettre la valeur temporelle (TB1) du noeud de référence (N1) depuis le noeud de référence (N1) jusqu'à l'autre noeud (N2 à N4)
**caractérisé en ce que** les signaux d'horloge (CLKi) des noeuds possèdent des fréquences différentes et :
ladite fréquence de modification simulée est fixée à une valeur prédéterminée qui est un multiple de la fréquence du signal d'horloge (CLK1) du noeud de référence (N1), et
la valeur de période locale (LOCPERIODi) de chaque noeud (Ni) est égale à la fréquence de modification simulée divisée par la fréquence du signal d'horloge correspondant (CLKi).

2. Système de traitement (100) selon la revendication 1 dans lequel le noeud de référence (N1) comprend un moyen (306, 369, 372) pour transmettre périodiquement un message de synchronisation (SYNC DATA) aux autres noeuds, chaque autre noeud (N2 à N4) utilisant le message de synchronisation (SYNC DATA) pour réaliser l'opération de synchronisation.

3. Système de traitement (100) selon la revendication 2, dans lequel le message de synchronisation (SYNC DATA) comprend un champ initial (START) et un champ d' incrémentation (INC), le noeud de référence (N1) comprenant un moyen (336) stockant une valeur d'incrémentation indicative d'un temps nécessaire pour transmettre le message dé synchronisation (SYNC DATA) entre deux noeuds consécutifs (Ni, Ni+1) , un moyen (345, 351) pour fixer le champ initial (START) du message de synchronisation à la valeur temporelle (TBi) plus la valeur d'incrémentation, et un moyen (364) pour fixer le champ d'incrémentation (INC) du message de synchronisation à la valeur d'incrémentation.

4. Système de traitement (100) selon la revendication 3, dans lequel le noeud de référence (N1) comprend un moyen (306) pour transmettre le message de synchronisation (SYNC DATA) à un noeud suivant (N2), chaque autre noeud (Ni) comprenant un moyen (303) pour recevoir le message de synchronisation (SYNC DATA) d'un noeud précédent (Ni-1), un moyen (303a, 327) pour fixer la valeur temporelle (TBi) à la valeur du champ initial (START) du message de synchronisation reçu, un moyen (303a, 348, 351) pour modifier le message de synchronisation reçu (SYNC DATA) en ajoutant le champ d'incrémentation (INC) au champ initial (START), et un moyen (306) pour transmettre le message de synchronisation modifié (SYNC DATA) à un noeud suivant (Ni+1).

5. Système de traitement (100) selon l'une quelconque des revendications 1 à 4, dans lequel chaque autre noeud (N2 à N4 ) comprend un moyen (324, 327, 369, 372) pour interrompre l'augmentation de la valeur temporelle (TBi) essentiellement avant chaque opération de synchronisation de manière à conserver la valeur temporelle (TBi) fixée à une valeur qui ne soit pas plus grande que la valeur modifiée par l'opération de synchronisation.

6. Système de traitement (100) selon la revendication 5, dans lequel le message de synchronisation comprend de plus un champ final (END), le noeud de référence (N1) comprenant un moyen (354, 357, 363) pour fixer le champ final (END) du message de synchronisation à la valeur de la valeur temporelle (TBi) plus une valeur (SYNCPERIOD) indicative d'une période de l'opération de synchronisation, chaque autre noeud (Ni) comprenant un moyen (369) stockant une valeur de comptage finale, un moyen (324, 327, 369, 372) pour interrompre l'augmentation de la valeur temporelle (TBi) quand la valeur temporelle (TBi) atteint la valeur de comptage finale, un moyen (303b, 366) pour fixer la valeur de comptage finale à la valeur du champ final (START) du message de synchronisation reçu et un moyen (303b, 360, 363) pour modifier le message de synchronisation (SYNC DATA) en ajoutant le champ d'incrémentation (INC) au champ final (END).

7. Système de traitement (100) selon la revendication 5 ou la revendication 6, dans lequel chaque noeud (N1 à N4) comprend une pluralité d'unités (C1 à C4, 115, 120, 125, 130), l'une desdites unités étant adéquate pour fournir des demandes de lecture de ladite valeur temporelle et le noeud correspondant comprenant un moyen (325, 327) pour augmenter la valeur temporelle (TBi) d'une valeur prédéterminée (+1) lors de chaque demande de lecture correspondante quand la valeur temporelle (TBi) est fixée.

8. Système de 1 traitement (100) selon l'une quelconque des revendications 3 à 7, dans lequel le noeud de référence (N1) comprends un moyen (303) pour recevoir le message de synchronisation (SYNC DATA) depuis le noeud précédent (N4), un moyen (339) pour comparer le champ initial (START) du message de synchronisation reçu à la valeur temporelle (TBi) et un moyen (342) pour modifier la valeur d'incrémentation en fonction du résultat de la comparaison.

9. système de traitement (100) selon l'une quelconque des revendications 1 à 8, dans lequel les noeuds (N1 à N4) sont reliés l'un à l'autre par un moyen de communication distant (105), l'une desdites unités (C1 à C4, 115, 120, 125, 130) étant une unité de pont (125) destinée à connecter le noeud (Ni) au moyen de communication distant (105), le moyen (315) stockant la valeur temporelle (TBi) et le moyen (303a, 327) destiné à la réalisation de l'opération de synchronisation étant situés dans l'unité de pont (125).

10. Système de traitement (100) selon l'une quelconque des revendications 1 à 9, dans lequel le système de traitement (100) est un système du type accès mémoire non uniforme à cohérence de cache.

11. Procédé de commande d'un temps système dans un système de traitement multiprocesseur (100) comprenant une pluralité de noeuds (N1 à N4) chacun possédant un moyen (135) pour générer un signal d'horloge indépendant (CLKi) pour synchroniser le fonctionnement du noeud (Ni)
a) augmentant, dans chaque noeud (Ni), une valeur temporelle (TBi) indicative d'un temps système, lors de chaque signal d'horloge (CLKi), d'une valeur de période locale (LOCPERIODi) de manière à simuler une fréquence essentiellement égale de modification de la valeur temporelle (Tbi) pour tous les noeuds (N1 à N4),
b) réalisant périodiquement, dans chaque noeud (N2 à N4) autre qu'un noeud de référence (N1), une opération de synchronisation dans laquelle la valeur temporelle (TBi) est modifiée en fonction de la valeur temporelle (TB1) du noeud de référence (N1) et d'une valeur (INC) indicative d'un temps nécessaire pour transmettre la valeur temporelle (TB1) du noeud de référence (N1) depuis le noeud de référence (N1) â l'autre noeud (N2 à N4),
**caractérisé en ce que** lesdits signaux d'horloge (CLKi) possèdent des fréquences différentes, et **en ce qu'**il comprend de plus les étapes consistant à :
c) fixer la fréquence de modification simulée à une valeur prédéterminée qui est un multiple de la fréquence du signal d'horloge (CLKL) du noeud de référence (N1),
d) fixer la valeur de période locale (LOCPERIODi) de chaque noeud (Ni) à la valeur de la fréquence de modification simulée divisée par la fréquence du signal d'horloge correspondant (CLKi).
